Europäisches Patentamt

(19) European Patent Office

Office européen des brevets

(11) Veröffentlichungsnummer: **0 011 685 B1**

(12) **EUROPÄISCHE PATENTSCHRIFT**

(45) Veröffentlichungstag der Patentschrift:
15.09.82

(21) Anmeldenummer: 79103203.0

(22) Anmeldetag: 29.08.79

(51) Int. Cl.³: **G 06 F 13/00**, G 06 F 11/00, G 11 C 7/00

(54) **Programmierbare Speicherschutzeinrichtung für Mikroprozessorsysteme und Schaltungsanordnung mit einer derartigen Einrichtung.**

(30) Priorität: 29.09.78 DE 2842548

(43) Veröffentlichungstag der Anmeldung:
11.06.80 Patentblatt 80/12

(45) Bekanntmachung des Hinweises auf die Patenterteilung:
15.09.82 Patentblatt 82/37

(84) Benannte Vertragsstaaten:
AT BE CH FR GB IT NL SE

(56) Entgegenhaltungen:
DD-A-75 162
DE-A-1 952 158
DE-A-2 148 689
DE-A-2 625 113
DE-A-2 639 557
DE-B-2 044 049

(73) Patentinhaber: SIEMENS AKTIENGESELLSCHAFT
Berlin und München, Postfach 22 02 61,
D-8000 München 22 (DE)

(72) Erfinder: Fischer, Rudolf, Dipl.-Ing., Kristallstrasse 10,
D-8000 München 50 (DE)

## Programmierbare Speicherschutzeinrichtung für Mikroprozessorsysteme und Schaltungsanordnung mit einer derartigen Einrichtung

Die Erfindung betrifft eine programmierbare Speicherschutzeinrichtung für Mikroprozessorsysteme.

Mikroprozessoren verfügen über keine Funktionseinheiten zum Schutz des Speichers vor unberechtigten Zugriffen. In komplexeren Mikrocomputersystemen, die mit einem Betriebssystem arbeiten, kommt es daher besonders beim Programmtest zu schwerwiegenden Fehlern, wenn ein zu testendes Programm das ungeschützte Betriebssystem überschreibt oder an einer undefinierten Stelle ins Betriebssystem einspringt.

Bisher blieb es dem Programmierer eines Mikrocomputersystems überlassen, dafür zu sorgen, daß sein Programm keine unzulässigen Speicherzugriffe tätigt. Gerade beim Programmtest lassen sich jedoch unkontrollierte Speicherzugriffe nicht immer vermeiden. Deshalb kommt es relativ häufig vor, daß wichtige Systemprogramme, die sich im RAM-Speicher befinden, ohne Fehlermeldung von einem unkorrekt ablaufenden Anwenderprogramm überschrieben werden. Die zerstörten Systemprogramme können dann nach ihrem Start im ungünstigsten Fall z. B. die auf einer abgeschlossenen Floppy-Disk gespeicherte Information überschreiben.

Aus DE-OS 19 52 158 sind ein Speicherschutzverfahren und eine Einrichtung zur Durchführung dieses Verfahrens bekannt. Bei dieser bekannten Einrichtung sind u. a. ein Grenzadreßregister, in das zumindest eine einen zu schützenden Speicherbereich kennzeichnende Grenzadresse eingebbar ist, eine Adreßfehler-Erkennungseinrichtung, der eine jeweils an einem Adreßbus liegende aktuelle Adresse und die Grenzadresse zuführbar sind und in der die aktuelle Adresse und die Grenzadresse miteinander verarbeitbar sind, und eine Steuerlogik vorhanden, mittels derer aufgrund eines über eine Adreßfehler-Signalleitung lieferbaren, einen Adreßfehler anzeigenden Ausgangssignals der Adreßfehler-Erkennungseinrichtung ein von dem betreffenden Prozessor vorbereiteter Hauptspeicherzyklus verboten wird.

Aus DD-PS 75 162 ist für eine Schaltungsanordnung zur Durchführung des Speicherschutzes u. a. bekannt, einen zu schützenden Speicher in mehrere Speicherblöcke zu unterteilen und jedem Block einen Speicherschlüssel zuzuordnen, wobei die Speicherschlüssel für mehrere Speicherblöcke in einem Register untergebracht sind.

Der Erfindung liegt die Aufgabe zugrunde, eine programmierbare Speicherschutzeinrichtung zu schaffen, mit deren Hilfe gezielt bestimmte zu schützende Speicherbereiche eines Mikroprozessorsystems, die der Systemprogrammierer festlegen muß, vor unzulässigen Zugriffen schützbar sind. Aufgabengemäß soll diese Speicherschutzeinrichtung außerdem einen einfachen, mit herkömmlichen Bausteinen zu realisierenden Aufbau haben.

Die der Erfindung zugrunde liegende Aufgabe wird durch eine programmierbare Speicherschutzeinrichtung für Mikroprozessorsysteme gemäß dem Oberbegriff des Patentanspruchs 1 gelöst, die durch die in dessen kennzeichnendem Teil angegebenen Merkmale charakterisiert ist.

Die Erfindung bietet den Vorteil, daß ein Speicherbereich, bzw. mehrere Speicherbereiche innerhalb eines Mikroprozessorsystems vor unzulässigen schreibenden oder lesenden Zugriffen durch fehlerhafte Anwenderprogramme oder durch fehlerhafte Bedienungen durch den Programmierer schützbar sind.

Weiterbildungen der Erfindung sind durch die in den Unteransprüchen angegebenen Merkmale gekennzeichnet.

Im folgenden wird die Erfindung an Hand mehrerer, Ausführungsbeispiele für die Erfindung betreffender Figuren erläutert.

Fig. 1 zeigt das Blockschaltbild eines Ausführungsbeispiels für die erfindungsgemäße Speicherschutzeinrichtung (nachfolgend Speicherschutzlogik genannt) mit einer Adreßfehler-Erkennungseinrichtung AFE, einem Grenzadreßregister GAR, einer Steuerlogik STL und weiteren an einen Datenbus D und einen Adreßbus A angeschlossenen Einrichtungen;

Fig. 2 zeigt das Schaltbild der Steuerlogik STL;

Fig. 3 zeigt die Schaltung einer Befehlsaufschalt-Einrichtung BA und eines »Entry-Point-Registers« EPAR. Beide Einrichtungen sind gemäß Fig. 1 bei der Steuerlogik STL angeordnet;

Fig. 4 zeigt in vereinfachter Form die Zusammenschaltung des Adreßbusses A und eines Hilfsbusses, über den ein Grenzadreßregister GARH/GARL verbindbar ist, mit einem Komparator COMP;

Fig. 5 zeigt das Ausführungsbeispiel für eine Teilschaltung der erfindungsgemäßen Speicherschutzlogik, mit deren Hilfe mehrere Speicherbereiche eines Datenverarbeitungssystems schützbar sind;

Fig. 6 zeigt das Blockschaltbild eines Registers, mittels dessen eine Analyse eines aufgetretenen Adreßfehlers ermöglicht ist;

Fig. 7 zeigt in Form eines Blockschaltbildes die Anordnung der erfindungsgemäßen Speicherschutzlogik SSL innerhalb eines mit einer SAB 8080 CPU aufgebauten Mikroprozessorsystems.

Die im folgenden erläuterte Speicherschutzlogik vergleicht die am Anfang eines Maschinenzyklus am Adreßbus eines Mikroprozeßsystems erscheinende Adresse mit dem Wert, den ein Systemprogramm zuvor — um bestimmte Speicherbereiche zu schützen — in ein Grenzadreßregister eingetragen hat. Sofern dieser Vergleich ergibt, daß die anliegende Adresse auf eine geschützte Speicherstelle zeigt, verhindert die Speicherschutzlogik einen schreibenden Zugriff. Nachdem nun ein Zugriff auf eine geschützte Speicherstelle erkannt wurde, bricht die Speicherschutzlogik nach der Ausführung des Befehls, der den unzulässigen Zugriff ausführen wollte, das ablaufende Programm mit einem Rücksprung ins Betriebssystem ab. Dieser Rücksprung darf jedoch nicht mit einem Interrupt initiiert werden, da beispielsweise der Mikroprozessor SAB 8080 über keinen nichtmaskierbaren Interrupt verfügt und deshalb ein Speicherschutzalarm, der bei gesetzter Interruptsperre auftritt, wirkungslos bliebe. Vielmehr muß die Speicherschutzlogik das Lesen des folgenden Befehls aus dem Speicher unterdrükken und dem Prozessor statt dessen einen Sprungbefehl auf dem Datenbus anbieten. Das dadurch gestartete Programm kann nun die Adresse des Befehls, der den Speicherschutzalarm verursacht hat und die Adresse, auf die zugegriffen werden sollte, aus zwei Registern der Speicherschutzlogik lesen und zur Analyse durch den Anwenderprogrammierer auf die Konsole ausgeben.

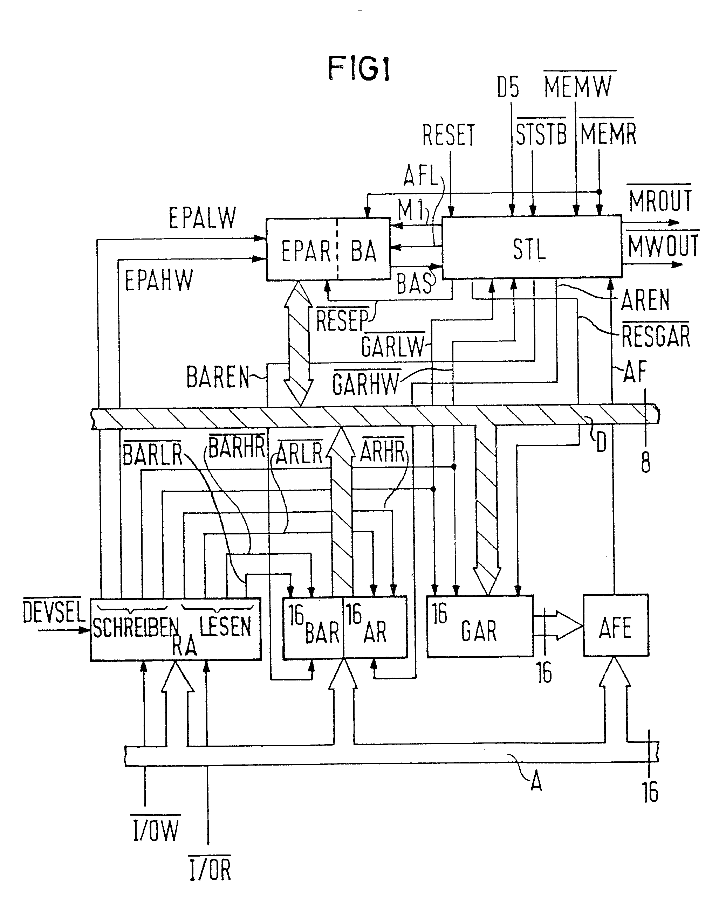

Wie bereits erwähnt, zeigt Fig. 1 das Blockschaltbild eines Ausführungsbeispiels für die erfindungsgemäße Speicherschutzlogik.

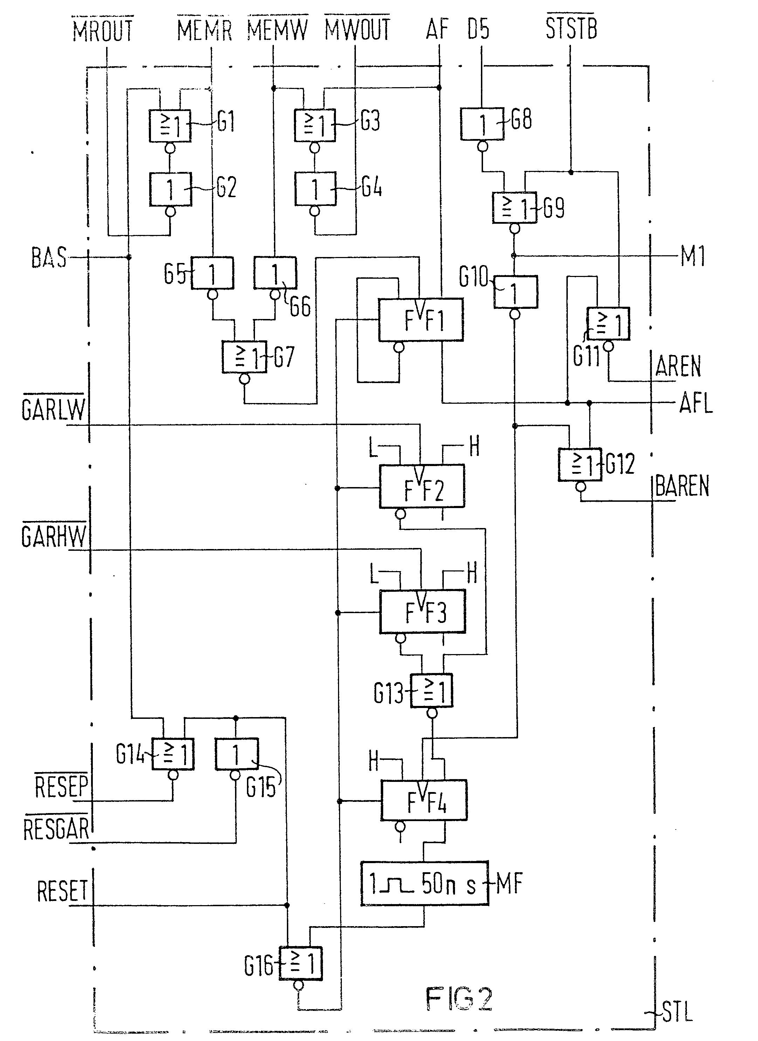

Die wichtigste Komponente stellt dabei die Steuerlogik STL dar, die in Fig. 2 im einzelnen gezeigt ist. Sie übernimmt die Signale MEMR und MEMW vom Prozessor und leitet sie als MROUT und MWOUT an den Speicher weiter. Sofern jedoch die Adreßfehlerkennungseinrichtung AFE festgestellt hat, daß ein unerlaubter Zugriff vorliegt, sperrt sie die Weitergabe eines eventuell vorhandenen MEMW-Signals und verhindert so das Überschreiben einer geschützten Speicherstelle. Gleichzeitig verhindert die Steuerlogik STL mit den Signalen AREN und BAREN die weitere Übernahme des Adreßbus-Inhalts in das Adreßregister AR und das Befehlsadreßregister BAR, so daß die Adresse des Befehls, der den Speicherschutzalarm verursacht hat, sowie die Adresse der Speicherstelle, auf die zugegriffen werden sollte, in den entsprechenden Register für die später erfolgende Analyse des Speicherschutzalarms erhalten bleiben. Anschließend verhindert die Steuerlogik STL beim nächsten Befehlsaufrufzyklus durch Sperren des MROUT-Ausgangs das Lesen des nächsten Befehls aus dem Speicher und startet stattdessen die Befehlsaufschaltung. Diese schaltet dann jeweils mit MEMR synchronisiert den Operationscode eines Sprungbefehls und die in einem Entry-Point-Adreßregister EPAR eingetragene Adresse auf den Datenbus D und bewirkt damit, daß der Prozessor einen Sprung in die Systemprogramme ausführt. Der Beginn der Befehlsaufschaltung wird der Steuerlogik STL mit dem Signal BAS gemeldet, woraufhin diese das Grenzadreßregister GAR zurücksetzt und damit das weitere Auftreten eines Speicherschutzalarms bis zur Neuprogrammierung des Grenzadreßregisters GAR verhindert. Diese erfolgt mit Hilfe zweier OUT-Befehle. Daraufhin schaltet sich die Speicherschutzlogik beim übernächsten Befehlsaufrufzyklus wieder ein und erlaubt damit noch die Ausführung eines im geschützten Bereich des Betriebssystems stehenden Sprungbefehls, womit ein im ungeschützten Bereich stehendes Anwenderprogramm gestartet wird.

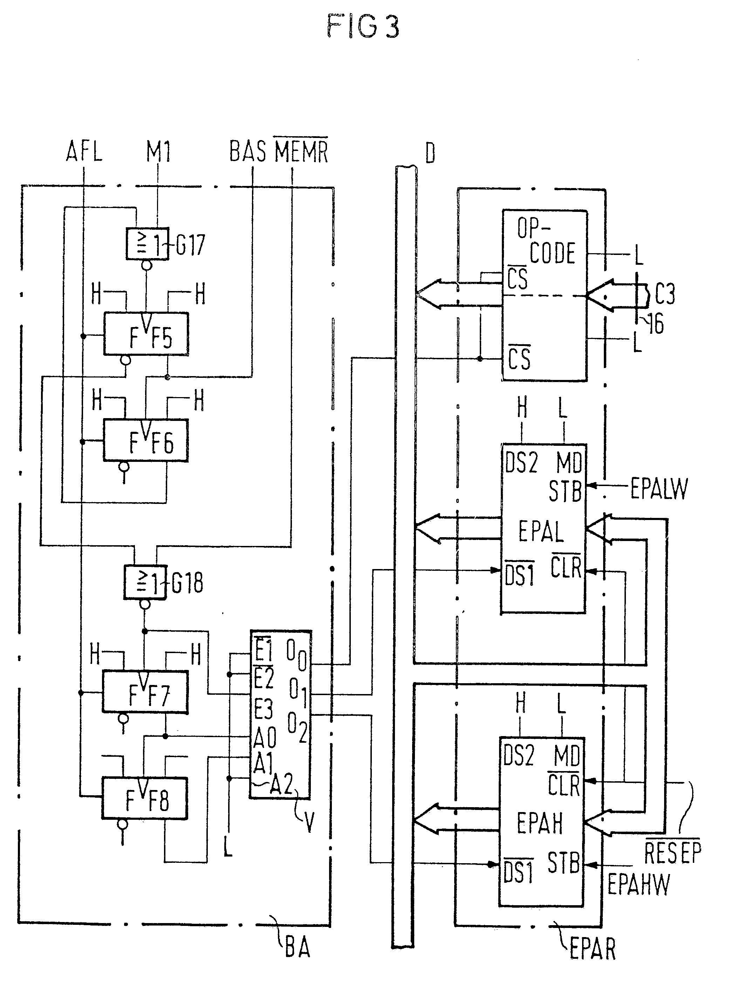

Die Befehlsaufschalt-Einrichtung BA, deren Schaltung in Fig. 3 gezeigt ist, wird auf Befehl der Steuerlogik gestartet. Beim nächsten Befehlsaufrufzyklus schaltet sie mit dem Signal MEMR synchronisiert den fest vorgegebenen Operationscode eines Sprungbefehls auf den Datenbus D. Die nächsten beiden MEMR-Impulse führen dann zur Aufschaltung des Inhalts der beiden Hälften EPAL und EPAH des Entry-Point-Adreßregisters, in die ein Systemprogramm zuvor die Zieladresse des Sprungbefehls eingetragen hat. Nach erfolgter Befehlsaufschaltung inhibiert sich die Logik bis zu einem erneuten Start durch die Steuerlogik SZL.

Für die im Blockschaltbild wiedergegebene Adreßfehler-Erkennungseinrichtung AFE sind abhängig von der Anzahl und der Länge der zu schützenden Speicherbereiche zwei Varianten ausführbar.

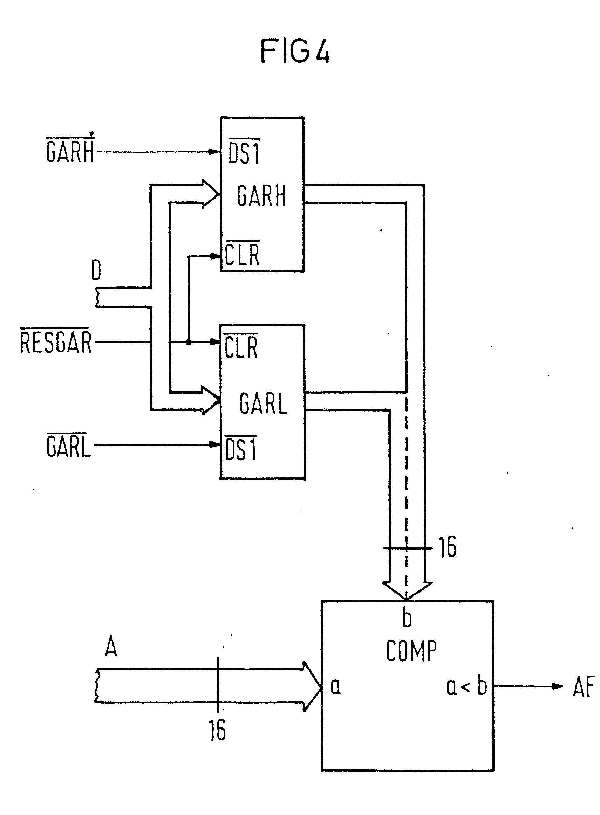

Sofern nur ein zusammenhängender Bereich, der zwischen der niedrigsten Adresse $\Phi$ und einer oberen Grenzadresse liegt, geschützt werden soll, ist die in Fig. 4 gezeigte Schaltung zu verwenden. Sie vergleicht den Inhalt des Grenzadreßregisters GAR mit der zum Adreßbus A anliegenden Information und liefert ein Signal mit dem Binärwert an den Ausgang AF, falls deren Wert größer als die Grenzadresse ist.

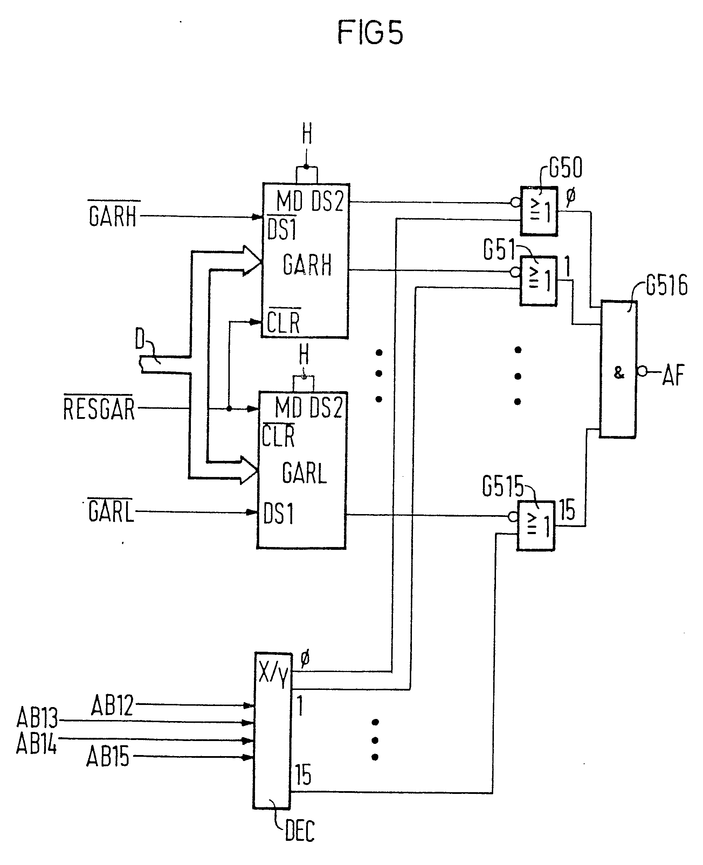

Sollen jedoch mehrere nicht zusammenhängende Speicherbereiche geschützt werden, so ist die in Fig. 5 gezeigte Schaltung anzuwenden. Bei dieser Schaltung wird davon ausgegangen, daß der Gesamtspeicher in 16 Blöcke zu je 4 KByte eingeteilt wird. Jeden dieser Blöcke kann der Systemprogrammierer durch Setzen des entsprechenden Bits im Grenzadreßregister GAR für Zugriffe sperren. Durch den 1 aus 16-Dekoder DEC und die nachfolgende Verknüpfungseinrichtung wird erreicht, daß ein Signal mit dem Binärwert H am Ausgang erscheint, wenn die am Adreßbus A anliegende Information auf einen geschützten Speicherblock zeigt.

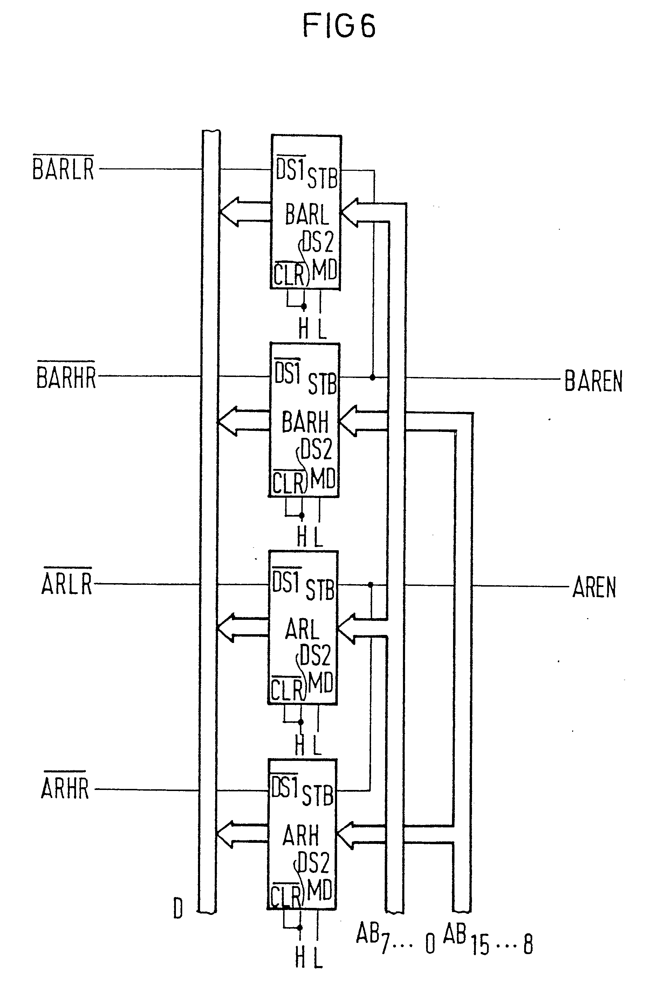

Die in Fig. 6 gezeigten Register erleichtern die Analyse eines Speicherschutzalarms. Dazu wird bei jedem Maschinenzyklus die am Adreßbus A anliegende Information in das Adreßregister AR übernommen. Im Gegensatz dazu speichert das Befehlsadreßregister BAR nur die beim Befehlsaufrufzyklus auftretende Adresse. Beide Register werden nach einem Adreßfehler inhibiert, so daß die Adresse des Befehls, der den Speicherschutzalarm verursacht hat, sowie die Adresse, auf die zugegriffen werden sollte, von einem Systemprogramm aus den entsprechenden Registern gelesen werden kann.

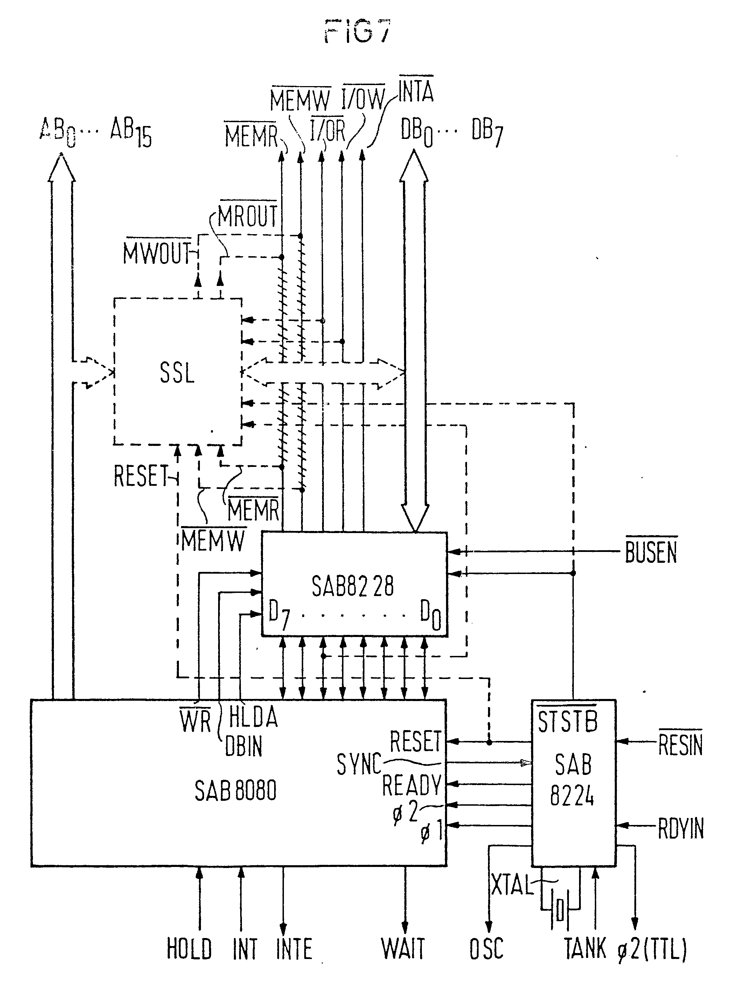

Die Zusammenschaltung der beschriebenen, programmierbaren Speicherschutzlogik mit einem SAB 8080-System zeigt Fig. 7. Wie ersichtlich, wird die Speicherschutzlogik SL ähnlich einem E/A-Baustein mit der SAB 8080-CPU-Gruppe verbunden. Zusätzlich sind jedoch der gesamte Adreßbus A, die Steuersignale $\overline{\text{STSTB}}$ und Reset, sowie zumindest ein Datenbusbit, z. B. D₅, des Prozessors anzuschließen. Wichtig für die Speicherschutzschaltung ist die Unterbrechung der Verbindung zwischen $\overline{\text{MEMR}}$ bzw. $\overline{\text{MEMW}}$ und dem Speicher. Die Steuerung des Speichers erfolgt dann durch die Ausgänge $\overline{\text{MROUT}}$ und $\overline{\text{MWOUT}}$ der Speicherschutzlogik.

**Patentansprüche**

1. Programmierbare Speicherschutzeinrichtung für Mikroprozessorsysteme, in der ein Grenzadreßregister, in das zumindest eine einen zu schützenden Speicherbereich kennzeichnende Grenzadresse eingebbar ist, eine Adreßfehler-Erkennungseinrichtung, der eine jeweils an einem Adreßbus liegende aktuelle Adresse und die Grenzadresse zuführbar sind, und eine Steuerlogik, mittels derer aufgrund eines über eine Adreßfehler-Signalleitung lieferbaren, einen Adreßfehler anzeigenden Ausgangssignals der Adreßfehler-Erkennungseinrichtung ein von dem betreffenden Prozessor geliefertes Speicherschreibsignal unterdrückbar ist, vorgesehen sind, in der die aktuelle Adresse und die Grenzadresse in der Adreßfehler-Erkennungseinrichtung miteinander verarbeitbar sind, wobei die Adreßfehler-Erkennungseinrichtung als Komparator ausgeführt ist, dem über den Adreßbus eine jeweils aktuelle Adresse und aus dem Grenzadreßregister eine Grenzadresse zuführbar ist, wobei der Komparator ein einen Adreßfehler kennzeichnendes Signal an die Adreßfehler-Signalleitung abgibt, wenn die Bedingung »aktuelle Adresse < Grenzadresse« erfüllt ist, wobei der zu schützende Sperrbereich in mehrere Speicherblöcke unterteilt ist und jedem Speicherblock ein Speicherschlüssel zugeordnet ist, welche Speicherschlüssel für mehrere Speicherblöcke in einem Register untergebracht sind, und wobei die Adreßfehler-Erkennungseinrichtung als eine aus einem mit seinen Eingängen an eine Gruppe der hochwertigen Bitleitungen des Adreßbusses angeschlossenen Dekoder und aus einer mit mehreren ersten Verknüpfungsgliedern und einem zweiten Verknüpfungsglied bestehende Schaltungsanordnung ausgeführt ist, dadurch gekennzeichnet, daß jeder individuelle Ausgang des Grenzadreßregisters (GAR bzw. GARH/GARL) einem bestimmten Speicherblock zugeordnet ist, der durch ein im Grenzadreßregister (GAR bzw. GARH/GARL) gespeichertes Bit als zugriffsfrei oder zugriffsgesperrt gekennzeichnet ist, daß jeder individuelle Ausgang des Grenzadreßregisters (GAR bzw. GARH/GARL) auf einen ersten Eingang eines ihm zugeordneten ersten Verknüfungsgliedes (z. B. G50), dessen zweiter Eingang jeweils mit einem ihm zugeordneten individuellen Ausgang des Dekoders (DEC) verbunden ist, geführt ist, und daß die Ausgänge aller ersten Verknüpfungsglieder (G50, G51 ... G515) jeweils an einen ihnen zugeordneten Eingang des zweiten Verknüfungsgliedes (G516) angeschlossen sind, dessen Ausgang mit der Adreßfehler-Signalleitung (AF) verbunden ist.

2. Programmierbare Speicherschutzeinrichtung nach Anspruch 1, dadurch gekennzeichnet, daß die Steuerlogik (STL) nach Empfang eines Adreßfehlersignals jeweils ein Signal an ein Adreßregister (AR) und ein Befehlsadreßregister (BAR) liefert, aufgrund dessen eine weitere Übernahme des Adreßbus-Inhaltes sperrbar ist, so daß die Adresse des Befehls, der das Adreßfehlersignal verursacht hat, und die Adresse der Speicherstelle, auf die zugegriffen werden sollte, für eine folgende Fehleranalyse erhalten bleiben.

3. Programmierbare Speicherschutzeinrichtung nach Anspruch 1, dadurch gekennzeichnet, daß nach Erkennen eines Adreßfehlers das Lesen eines folgenden Befehls unterdrückbar ist und daß dem betreffenden Prozessor ein Sprungbefehl über den Datenbus (D) angeboten wird, wodurch ein Rücksprung in das Betriebssystem ermöglicht ist, mit dessen Hilfe die Adresse des Befehls, der den Adreßfehler verursacht hat, und die Adresse, auf die zugegriffen werden sollte, ausgelesen und zum Zwecke einer Fehleranalyse auf eine Konsole ausgegeben werden können.

4. Schaltungsanordnung mit einer programmierbaren Speicherschutzeinrichtung nach einem der vorhergehenden Ansprüche, dadurch gekennzeichnet, daß die Speicherschutzeinrichtung (SSL) derart in ein mit einer SAB 8080 CPU realisiertes Mikroprozessorsystem eingebaut ist, daß die in aller Regel vorhandenen Speicherschreib- und Speicherlese-Befehlsleitungen ($\overline{\text{MEMW}}$, $\overline{\text{MEMR}}$) nicht unmittelbar, sondern über die Speicherschutzeinrichtung (SSL) an den Speicher geführt sind und daß der gesamte Adreßbus (A), zumindest eine Datenbus-Bitleitung (z. B. D5), bestimmte Steuersignalleitungen (z. B. STSTB) und die Reset-Leitung (RESET) des Systems an die Speicherschutzeinrichtung (SSL) angeschlossen sind.

**Claims**

1. Programmable storage protection device for microprocessor systems, wherein are arranged a limit address register into which at least one limit address which designates a storage zone to be protected can be input, and an address error recognition device to which an actual address, which is applied to an address bus in each case, and the limit address can be supplied, and a control logic by means of which a store write signal supplied by the respective processor can be suppressed on the basis of an output signal of the address error recognition device which indicates an address error and can be supplied via an address error signal line, and wherein the actual address and the limit address can be processed with one another in the address error recognition device, and wherein the address error recognition device is constructed as a comparator which can be fed with an actual address via the address bus in each case and with a limit address from the limit address register, and wherein the comparator emits a signal which indicates an address error to the address error line if the condition »actual address limit address« is fulfilled, and wherein the blocking zone to be protected is divided into a plurality of storage blocks and each storage block is assigned a storage key, which storage keys for a plurality of storage blocks are accommodated in a register, and wherein the address error recognition device is constructed as a circuit arrangement which consists of a decoder, which by means of its inputs, is connected to a group of bit lines of the address bus which have the highest value, and consists of a comprising a plurality of first switching elements and a second switching element, characterised in that each individual output of the limit address register (GAR and GARH/GARL) is assigned a specific storage block which is qualified as zero-access or blocked-access by a bit stored in the limit address register (GAR and GARH/GARL), and that each individual output of the limit address register (GAR and GARH/GARL) is led to a first input of an assigned first switching element (e. g. G50) whose second input is respectively connected to an assigned individual output of the decoder (DEC), and that the outputs of all first switching elements (G50, G51 ... G515) are respectively connected to an assigned input of the second switching element (G516) whose output is connected to the address error signal line (AF).

2. Programmable storage protection device as claimed in claim 1, characterised in that following the receipt of an address error signal, the control logic (STL) respectively supplies a signal to an address register (AR) and to an instruction address register (BAR), on the basis of which signal a further transfer of the address bus content can be blocked, so that the address of the instruction, which has produced the address error signal, and the address of the storage location, to which access should have been provided, remain unaltered for a subsequent error analysis.

3. Programmable storage protection device as claimed in claim 1, characterised in that following the recognition of an address error, the reading process of a following instruction can be suppressed, and that the respective processor is offered a jump instruction by means of the data bus (D), whereby a return jump into the operating system is enabled, with the aid of which the address of the instruction, which has produced the address error, and the address, to which access should have been provided, can be read out and emitted to a console for the purpose of an error analysis.

4. Circuit arrangement with a programmable storage protection device as claimed in one of the preceding claims, characterised in that the storage protection device (SSL) is incorporated in a microprocessor system, which is constructed by means of a SAB 8080 CPU, in such manner that the usually provided storage write instruction lines and storage read instruction lines (MEMW, MEMR) are not directly led to the store but via the storage protection device (SSL), and that the overall address bus (A), at least one data bus bit line (e. g. D5), specific control signal lines (e. g. STSB) and the reset line (REST) of the system are connected to the storage protection device (SSL).

**Revendications**

1. Dispositif programmable de protection de mémoire pour des Systèmes de microprocesseurs, du type dans lequel sont prévus un registre d'adresses limites dans lequel peut être introduite une adresse limite caractérisant une zone de mémoire à protéger, un dispositif d'identification d'une erreur d'adresse auquel sont applicables une adresse actuelle qui se trouve appliquée à un bus d'adresses et l'adresse limite, et une logique de commande à l'aide de laquelle peut être supprimé, en raison d'un signal de sortie du dispositif d'identification d'erreur d'adresse susceptible d'être fourni par l'intermédiaire d'une ligne de signaux d'erreurs d'adresses et indiquant une erreur d'adresse, un signal d'écriture de mémoire fourni par le processeur concerné, et dans lequel l'adresse actuelle et l'adresse limite sont susceptibles d'être traitées ensemble dans le dispositif de reconnaissance d'erreurs d'adresses, le dispositif de reconnaissance d'erreurs d'adresses étant réalisé sous la forme d'un comparateur auquel sont susceptibles d'être appliquées une adresse actuelle à partier du bus d'adresses et une adresse limite à partir du registre d'adresses limites, alors que le comparateur applique au conducteur de signaux d'erreurs d'adresses un signal caractérisant une erreur d'adresse lorsqu'est satisfaite la relation »adresse actuelle < adresse limite«, que la zone de blocage à protéger est subdivisée en plusieurs blocs de mémoire et qu'à chaque bloc de mémoire est associé un code d'enregistrement, lesdits codes d'enregistrement pour plusieurs blocs de mémoire étant disposés dans un registre, et que le dispositif d'identification d'erreurs d'adresses est constitué par un décodeur relié par ses entrées à un groupe de lignes de bits de poids le plus élevé du bus d'adresses et par un montage constitué de plusieurs premiers circuits logiques et d'un second circuit logique, caractérisé par le fait que chaque sortie individuelle du registre d'adresses limites (GAR ou GARH/GARL) est associée à un bloc de mémoire associé qui est caractérisé par un bit mémorisé dans le registre d'adresses limites (GAR ou GARH/GARL) comme étant d'accès libre ou d'accès bloqué, que chaque sortie individuelle du registre d'adresses limites (GAR ou GARH/GARL) est reliée à une première entrée d'un premier circuit logique (par exemple G50) qui lui est associée et dont la seconde entrée est reliée à une sortie individuelle du décodeur (DEC) qui lui est associée et que les sorties de tous les premiers circuits logiques (G50, G51 ... G515) sont respectivement reliés à une entrée du second circuit logique (G516) qui leur est associée, la sortie de ce dernier étant reliée à la ligne de signaux (AF) d'erreurs d'adresses.

2. Dispositif programmable de protection de mémoire selon la revendication 1, caractérisé par le fait que la logique de commande (STL) fournit, après réception d'un signal d'erreur d'adresse, respectivement un signal à un registre d'adresses (AR) et à un registre d'adresses d'instructions (BAR), en conséquence de quoi est susceptible d'être bloquée toute autre prise en charge du contenu du bus d'adresses, en sorte que l'adresse de l'instruction qui a provoqué le signal d'erreur d'adresse et l'adresse de l'emplacement de mémoire à laquelle on devait accéder, sont conservées pour une analyse ayant ensuite lieu.

3. Dispositif programmable de protection de mémoire selon la revendication 1, caractérisé par le fait qu'après identification d'une erreur d'adresse, la lecture d'une instruction suivante est susceptible d'être supprimée et qu'au processeur concerné est offerte une instruction de saut par l'intermédiaire du bus de données (D), grâce à quoi un saut en arrière dans le système d'exploitation est rendu possible, à l'aide duquel l'adresse de l'instruction qui a provoqué l'erreur d'adresse, et l'adresse à laquelle on devait accéder, peuvent être lues et être fournies à une console en vue d'une analyse d'erreur.

4. Montage comportant un dispositif programmable de protection de mémoire selon l'une des revendications antérieures, caractérisé par le fait que le dispositif de protection de mémoire (SSL) est incorporé de telle façon dans un système de microprocesseurs réalisé avec un SAB 8080-CPU, que les lignes d'instructions d'écriture de mémoire et de lecture de mémoire ($\overline{\text{MEMW}}$, $\overline{\text{MEWR}}$), qui existend en règle générale, ne sont pas reliées directement, mais par l'intermédiaire du dispositif de protection de mémoire (SSL), à la mémoire, et que la totalité du bus d'adresses (A), au moins un conducteur de bits de bus de données (par exemple D5), certains conducteurs de signaux de commande (par exemple STSTB) et le conducteur de remise à l'état initial (RESET) du système, sont reliés au dispositif de protection de mémoire (SSL).

FIG1

FIG 2

# FIG 3

# FIG 4

FIG5

# FIG 6

# FIG 7